# EUROPEAN PATENT APPLICATION

(11) **EP 4 729 526 A2**
(43) Date of publication of application: **22.04.2026**
(21) Application number: 25205076.0
(22) Date of filing: 26.09.2025
(51) Int. Cl.: C07F 7/22, C08K 5/58, C08L 27/06, C08K 5/00

(54) **BIS(ALKYLTIN MERCAPTIDES) AND THEIR USE AS HEAT STABILIZERS**

(30) Priority: 27.09.2024 US 202418899513
(71) Applicant: Galata Chemicals, LLC, Jersey City, NJ 07311 (US)
(72) Inventor: FRENKEL, Peter, Danbury, 06811 (US)
(74) Representative: Porta & Consulenti Associati S.p.A.

(57) **Abstract**

A composition of liquid bis(alkyltin mercaptide) compounds containing 4-6 thio-ester groups of formula (I):

(R"S)ₐR'Sn(SR‴S)SnR'_{c}(SR")_{d}, (I)

where
a, b, c and d are equal to 1 or 2, and a + b = c+ d = 3,
R' is a linear, branched, or cyclic C₁-C₁₂ hydrocarbon group,
SR" and R"S are independently selected from an alkyl thioglycolate group, an alkyl thiopropionate or a 2-mercaptoethyl carboxylate group, where the alkyl is a linear, branched, or cyclic C₆-C₁₈ hydrocarbon group; and
SR‴S is an alkylene glycol di-thioester group, where the alkyl groups are linear or branched C₁-C₆ hydrocarbon groups.

## Description

### FIELD OF THE INVENTION

The present invention relates to alkyltin heat stabilizer compounds and related compositions with chlorine-containing polymers and their compounds. More particularly, it relates to bis(alkyltin mercaptides) with multiple thio-ester groups.

### BACKGROUND

Several previously granted patents refer to compositions and processes for the preparation of organotin mercaptide heat stabilizers intended for use in manufacturing chlorine-containing polymer compounds, where the stabilizers contain several alkyltin thio-ester groups in their molecular chemical structure.

GB 743304 and US 2,883,363 describe alkyltin heat stabilizes obtained by reacting mono-, di- or trialkyltin chlorides or dialkyltin oxides with full esters of dibasic acids (such as adipic acid or azelaic acid) and mercaptoalcohol (such as 2-mercaptoethanol or 4-mercaptobutanol), where all sulfur atoms are completely reacted and chemically bonded with tin atoms. The reaction takes place in a hydrocarbon solvent (in order to prevent formation of polymeric alkyltin-containing components) and leads to the formation of cyclic alkyltin mercaptans if either mono- or di-alkyltin-containing raw material is used; formation of dimeric structures in the case of mono-alkyltin derivatives was postulated. The solvent was distilled out upon completion of the reaction.

GB 748228, US 2,752,325 and US 2,872,468 disclose alkyltin heat stabilizes obtained by reacting mono- or dialkyltin chlorides or dialkyltin oxides with a diester formed from a mercapto-acid (such as thioglycolic acid) and a glycol, such as ethylene glycol and 1,2-propylene glycol, where all sulfur atoms of the diester are completely reacted and chemically bonded with tin atoms. The reaction takes place in a hydrocarbon solvent (in order to prevent formation of polymeric alkyltin-containing components) and results in the formation of cyclic alkyltin mercaptans if either mono- or di-alkyltin-containing raw material is used. Formation of the corresponding dimeric structures in the case of dialkyltin derivatives was contemplated. The solvent was distilled out upon completion of the reaction.

GB 1,226,218 discloses alkyltin heat stabilizers obtained by reacting dialkyltin oxides with a diester formed from a mercapto-acid (such as thioglycolic acid) and a glycol, such as ethylene glycol and 1,2-propylene glycol, where all thiol groups of the diester are completely reacted with the dialkyltin oxide. The reaction takes place in a hydrocarbon solvent (in order to prevent formation of polymeric alkyltin-containing components) and leads to the formation of cyclic alkyltin mercaptans. Optionally, an alkyltin hydroxide and an alkyltin alkoxide among others can be used instead of the dialkyltin oxides. The solvent was distilled out upon completion of the reaction.

US 3,115,509 and US 8,088,937 disclose alkyltin heat stabilizes obtained by reacting mono- or dialkyltin chlorides or dialkyltin oxides with a dimercaptoacid ester of an organic diol, where a half of sulfur atoms of the diester are chemically bonded with tin atoms, while the other half remains free. The reaction results in the formation of linear (non-cyclic) alkyltin mercaptans containing a certain number of terminal SH groups.

US 3,640,953 includes (within the range of heat stabilizer options) a combination of a) linear bis-dialkyltin compounds containing two dialkyltin bis(octyl thioglycolate) groups bridged via a mercaptoacid or mercaptoethanol (obtained by reacting dialkyltin oxide or dialkyltin chloride with a mixture of mercaptoacid or mercaptoethanol with mercaptoacid ester) and b) a dialkyltin oxide complex with an ester, such as esters of phthalic acid.

GB 1,393,517 discloses heat stabilizers that contain bis-(di-alkyltin/mono-alkyltin) groups obtained by reacting monoalkyltin chloride and dialkyltin chloride, alkyltin oxides or alkyltin hydroxychlorides with a hydroxy thioester obtained by reacting a thio-acid (such as thioglycolic acid) with an unsaturated di-alcohol (such as 2-butene-1,4-diol) in a hydrocarbon solvent.

US 3,833,519 discloses dialkyltin stabilizers obtained by reacting dialkyltin oxides (such as di-n-butyltin oxide) or dialkyltin dichlorides with a mercaptoester derived from the reaction of a mercaptocarboxylic acid (such as thioglycolic acid) with polyhydric alcohol (such as pentaerythritol) and toll oil fatty acids.

US 3,565,930 and US 3,565,931 refer to the preparation of organotin sulfide stabilizer compounds, where two or more (alkyltin thioester) groups are linked through sulfur bridges between tin atoms; for example, bis(butyltin) di-iso-octylthioglycolate.

US 4,062,881 teaches the preparation of organotin sulfide stabilizer compounds, where two or more (alkyltin mercaptoethyl carboxylate) groups are linked through sulfur bridges between tin atoms; for example, bis(methyltin) di-(2-mercaptoethyl caprylate).

Nevertheless, a need for efficient liquid alkyltin stabilizers for chlorine-containing polymers and their compounds remains.

### SUMMARY OF THE INVENTION

The subject matter of the present disclosure relates to bis(alkyltin mercaptide)-containing heat stabilizer compositions for chlorine-containing polymers. These stabilizers provide enhanced stability (against thermal decomposition and in-process shear), and odor reduction performance.

In one embodiment, the present disclosure provides a composition of liquid bis(alkyltin mercaptide) compounds containing 4-6 thio-ester groups of formula (I):

(R"S)ₐR'_{b}Sn(SR‴S)SnR'_{c}(SR")_{d}, (I)

where
a, b, c and d are equal to 1 or 2, and a + b = c+ d = 3, R' is a linear, branched or cyclic C₁-C₁₂ hydrocarbon group, SR" and R"S are independently selected from an alkyl thioglycolate group, an alkyl thiopropionate or a 2-mercaptoethyl carboxylate group, where the alkyl is a linear, branched or cyclic C₆-C₁₈ hydrocarbon group; and SR‴S is an alkylene glycol di-thioester group, where the alkyl groups are linear or branched C₁-C₆ hydrocarbon groups.

In still another embodiment, the present disclosure relates to a process for preparing a composition of liquid bis(alkyltin mercaptide) compounds containing 4-6 thio-ester groups of formula (I):

(R"S)ₐR'_{b}Sn(SR‴S)SnR'_{c}(SR")_{d}, (I)

where
a, b, c and d are equal to 1 or 2, and a + b = c+ d = 3, R' is a linear, branched or cyclic C₁-C₁₂ hydrocarbon group, SR" and R"S are independently selected from an alkyl thioglycolate group, an alkyl thiopropionate or a 2-mercaptoethyl carboxylate group, where the alkyl is a linear, branched or cyclic C₆-C₁₈ hydrocarbon group; and SR‴S is an alkylene glycol di-thioester group, where the alkyl groups are linear or branched C₁-C₆ hydrocarbon groups,
the process comprising reacting dialkyltin oxides with alkylene glycol di-thioesters in the presence of monoalkyltin tris(2-ethylhexyl thioesters), dialkyltin bis(2-ethylhexyl thioesters), or mixtures thereof, wherein the dialkyltin oxides are selected from di-n-butyltin oxide, di-n-octyltin oxide or mixtures thereof, and the alkyl groups of the dialkyltin oxides, monoalkyltin tris-thioesters and dialkyltin bis-thioesters can be the same or different, and the alkylene glycol di-thioesters are selected from ethylene glycol dithioglycolate, 1,2-propylene glycol dithioglycolate, 1,3-propylene glycol dithioglycolate, 1,2-ethylene glycol dithiopropionate or mixtures thereof. This synthesis is conducted without the use of a hydrocarbon solvent.

In still another embodiment, the present disclosure relates to a process for the preparation of bis(alkyltin mercaptide) compounds containing 4 thioester groups, comprising reacting dialkyltin oxides with alkylene glycol di-thioesters in the presence of at least one of a monoalkyltin tris-thioester and a dialkyltin bis-thioester according to equations (1a) or (1b):

R'₂SnO + H₂(SR‴S) + R'₂Sn(SR")₂ → (SR")R'₂Sn(SR‴S)SnR'₂(SR'') + H₂O (1a)

R'₂SnO + H₂(SR‴S) + R'Sn(SR")₃ → (SR")R'₂Sn(SR‴S)SnR'(SR")₂ + H₂O (1b)

wherein no hydrocarbon solvent is used in the reaction, R'₂SnO is selected from di-n-butyltin oxide, di-n-octyltin oxide or a mixture thereof, and R' of R'₂SnO, R'Sn(SR")₃ and R'₂Sn(SR")₂ can be the same or different, H₂(SR‴S) is selected from ethylene glycol dithioglycolate, 1,2-propylene glycol dithioglycolate, 1,3-propylene glycol dithioglycolate, ethylene glycol dithiopropionate or mixtures thereof, R' is a linear, branched or cyclic C₁-C₁₂ hydrocarbon group, SR" and R"S are independently selected from an alkyl thioglycolate group, an alkyl thiopropionate or a 2-mercaptoethyl carboxylate group, where the alkyl is a linear, branched or cyclic C₆-C₁₈ hydrocarbon group; and SR‴S is an alkylene glycol di-thioester group, where the alkyl groups are linear or branched C₁-C₆ hydrocarbon groups, wherein the reaction is conducted at a temperature of 60.0 to 120.0°C for a time of 1.0 to 3.0 hours. This synthesis is conducted without the use of a hydrocarbon solvent.

In an embodiment, the present disclosure relates to a process for the preparation of bis(alkyltin mercaptide) compounds containing 4 or 5 thio-ester groups comprising reacting dialkyltin alkylene glycol dithioesters with either di-alkyltin bis-thioester or mono-alkyltin tris-thioester according to equations (2) or (3), wherein no hydrocarbon solvent is used in the synthesis:

R'₂Sn(SR‴S) + R'₂Sn(SR")₂ → (SR")R'₂Sn(SR‴S)SnR'₂(SR"), (2)

where R' of R'₂Sn(SR‴S) and R'₂Sn(SR")₂ can be the same or different; or

R'₂Sn(SR‴S) + R'Sn(SR")₃ → (SR")R'₂Sn(SR‴S)SnR'(SR'')₂, (3)

where R' of R'₂Sn(SR‴S), R'Sn(SR")₃ and R'₂Sn(SR")₂ can be the same or different, R' is a linear, branched or cyclic C₁-C₁₂ hydrocarbon group, SR" and R"S are independently selected from an alkyl thioglycolate group, an alkyl thiopropionate or a 2-mercaptoethyl carboxylate group, where the alkyl is a linear, branched or cyclic C₆-C₁₈ hydrocarbon group; and SR‴S is an alkylene glycol di-thioester group, where the alkyl groups are linear or branched C₁-C₆ hydrocarbon groups, wherein the reaction is conducted at a temperature of 25.0 to 120.0°C for a time of 1.0 to 3.0 hours

In an embodiment, the present disclosure relates to a process for the synthesis of bis(alkyltin mercaptide) compounds containing 4 to 6 thioester groups comprising:
- reacting alkylene glycol di-thioesters with either mono-alkyltinmono-chloro-bis-thioglycolates or dialkyltin (chloro-thioglycolates) according to equations (4) or (5):

   2 R'SnCl(SR")₂ + H₂(SR‴S) → (SR")₂R'Sn(SR‴S)SnR'(SR")₂ + 2 HCl, (4)

   or

   2 R'₂Sn[Cl(SR")] + H₂(SR‴S) → (SR")R'₂Sn(SR‴S)SnR'₂(SR'') + 2 HCl, (5)

wherein reactions (4) and (5) are performed in the presence of ammonia, and R'SnCl(SR")₂ or R'2Sn[Cl(SR")] are added last, and the product yield is 85.0 to 95.0 %; that is, the organotin compounds are added to the mixture of glycol dithioesters and ammonia.
R'SnCl(SR")₂ is prepared according to equation (6):

   2 R'Sn(SR")₃ + R'SnCl₃ → 3 R'SnCl(SR")₂, (6)

   where R' of R'Sn(SR")₃ and R'SnCl₃ can be the same or different, and
   and where R'₂Sn[Cl(SR")] is prepared according to equation (7):

      R'₂Sn(SR")₂ + R'₂SnCl₂ → 2 R'₂SnCl(SR"), (7)
   where R' of R'₂Sn(SR")₂ and R'₂SnCl₂ can be the same or different
wherein reactions (4) and (5) are conducted at a temperature of 40 to 100°C over 0.5 to 2.0 hours, and reactions (6) and (7) are conducted at a temperature of 50 to 180°C over 0.5 to 2.0 hours. This synthesis is conducted without the use of a hydrocarbon solvent.

In another embodiment, the present disclosure relates to a method for stabilizing a chlorine-containing polymer against thermal decomposition and in-process shear, comprising contacting a liquid bis(alkyltin mercaptide) composition of liquid bis(alkyltin mercaptide) compounds containing 4-6 thio-ester groups of formula (I):

(R"S)ₐR'_{b}Sn(SR‴S)SnR'_{c}(SR")_{d}, (I)

where
a, b, c and d are equal to 1 or 2, and a + b = c+ d = 3, R' is a linear, branched or cyclic C₁-C₁₂ hydrocarbon group, SR" and R"S are independently selected from an alkyl thioglycolate group, an alkyl thiopropionate or a 2-mercaptoethyl carboxylate group, where the alkyl is a linear, branched or cyclic C₆-C₁₈ hydrocarbon group; and SR‴S is an alkylene glycol di-thioester group, where the alkyl groups are linear or branched C₁-C₆ hydrocarbon groups with the chloride-containing polymer.

In another embodiment, the present disclosure relates to a stabilized polymer compound comprising a polymer resin selected from a CPVC, a PVC homopolymer, a PVC co-polymer or mixtures thereof; and a liquid bis(alkyltin mercaptide) composition of liquid bis(alkyltin mercaptide) compounds containing 4-6 thio-ester groups of formula (I):

(R"S)ₐR'_{b}Sn(SR‴S)SnR'_{c}(SR")_{d}, (I)

where
a, b, c and d are equal to 1 or 2, and a + b = c+ d = 3, R' is a linear, branched or cyclic C₁-C₁₂ hydrocarbon group, SR" and R"S are independently selected from an alkyl thioglycolate group, an alkyl thiopropionate or a 2-mercaptoethyl carboxylate group, where the alkyl is a linear, branched or cyclic C₆-C₁₈ hydrocarbon group; and SR‴S is an alkylene glycol di-thioester group, where the alkyl groups are linear or branched C₁-C₆ hydrocarbon groups.

In an another embodiment, the present disclosure relates to a process for manufacturing articles comprising molding, calendering or extruding a stabilized polymer compound a stabilized polymer compound comprising a polymer selected from a CPVC, a PVC homopolymer, a PVC co-polymer or mixtures thereof, and a liquid bis(alkyltin mercaptide) composition of liquid bis(alkyltin mercaptide) compounds containing 4-6 thio-ester groups of formula (I):

(R"S)ₐR'_{b}Sn(SR‴S)SnR'_{c}(SR")_{d}, (I)

where
a, b, c and d are equal to 1 or 2, and a + b = c+ d = 3, R' is a linear, branched or cyclic C₁-C₁₂ hydrocarbon group, SR" and R"S are independently selected from an alkyl thioglycolate group, an alkyl thiopropionate or a 2-mercaptoethyl carboxylate group, where the alkyl is a linear, branched or cyclic C₆-C₁₈ hydrocarbon group; and SR‴S is an alkylene glycol di-thioester group, where the alkyl groups are linear or branched C₁-C₆ hydrocarbon groups, the article being selected from profiles, sheets, pipes, film and pipe fittings.

In an another embodiment, the present disclosure relates to an article selected from profiles, sheets, pipes, film and pipe fittings, produced by a process comprising molding or extruding a stabilized polymer compound comprising a polymer selected from a CPVC, a PVC homopolymer, a PVC co-polymer or mixtures thereof; and a liquid bis(alkyltin mercaptide) composition of liquid bis(alkyltin mercaptide) compounds containing 4-6 thio-ester groups of formula (I):

(R"S)ₐR'_{b}Sn(SR‴S)SnR'_{c}(SR")_{d}, (I)

where

a, b, c and d are equal to 1 or 2, and a + b = c+ d = 3, R' is a linear, branched or cyclic C₁-C₁₂ hydrocarbon group, SR" and R"S are independently selected from an alkyl thioglycolate group, an alkyl thiopropionate or a 2-mercaptoethyl carboxylate group, where the alkyl is a linear, branched or cyclic C₆-C₁₈ hydrocarbon group; and SR‴S is an alkylene glycol di-thioester group, where the alkyl groups are linear or branched C₁-C₆ hydrocarbon groups.

### Detailed Description of the Invention

It was unexpectedly found that several different synthetic routes result in the formation of novel storage-stable liquid alkyltin thio-esters comprising bis(alkyltin mercaptide) compounds containing from 4 to 6 thio-ester groups of chemical formular (I):

(R"S)ₐR'_{b}Sn(SR‴S)SnR'_{c}(SR")_{d} (I)

where a, b, c, and d equal 1 or 2; a + b = c + d = 3. Formula (I) can be further detailed by Formulae Ia, Ib and Ic below:

(R"S)₂R'Sn(SR‴S)SnR'(SR")₂, (Ia)

(SR")R₂Sn(SR‴S) Sn R'₂(SR"), (Ib)

(SR")R'₂Sn(SR‴S)SnR'(SR")₂, (Ic)

where:
-R' is an alkyl linear, branched, or cyclic C₁-C₁₂ hydrocarbon group; methyl, n-butyl, n-octyl and a mixture thereof are preferred;
-SR" is an alkyl thioglycolate, an alkyl thiopropionate or 2-mercaptoethyl carboxylate group, where the R" alkyl group is linear, branched, or cyclic C₆-C₁₈ hydrocarbon group;
-SR‴S is an alkylene glycol dithioester, such as alkylene glycol di-thioglycolate or alkylene glycol di-thiopropionate, where the R"' alkyl group is linear or branched C₁-C₆ hydrocarbon group.

The storage-stable liquid bis(alkyltin mercaptides) of formula (I) of this invention were found to be effective heat stabilizers for chlorine-containing polymers. The bis(alkyltin mercaptides) of formula (Ib) were unexpectedly found to be exceptionally effective in minimizing thermal degradation of these polymers, especially during the initial period of their thermal exposure, e.g., as evidenced by heat stability tests that involved compounding the polymer formulations containing these heat stabilizers at elevated temperatures under in-process shear. Unexpectedly, in comparison with the conventional sulfur-containing organotin-containing heat stabilizers, these sulfur- and organotin-containing stabilizers also imparted reduced odor on the PVC compounds.

The bis(alkyltin mercaptides) of formula (I) of this invention were prepared according to the processes A, B, & C below. These processes are conducted without the use of hydrocarbon solvents, which is advantageous because the presence of hydrocarbon solvents in stabilizers and other additives is undesirable since they contribute detrimentally to the increase in VOC's (emissions from the compounding processes).

### A. Processes for the preparation of bis(alkyltin mercaptide) compounds containing 4 thio-ester groups (Ib) by reacting dialkyltin oxides with alkylene glycol di-thioesters in the presence of monoalkyltin tris-thioesters and/or dialkyltin bis-thioesters (equations (1a), (1b))

R'₂SnO + H₂(SR‴S) + R'₂Sn(SR")₂ → (SR")R'₂Sn(SR‴S)SnR'₂(SR'') + H₂O (1a)

R'₂SnO + H₂(SR‴S) + R'Sn(SR")₃ → (SR")R'₂Sn(SR‴S)SnR'(SR")₂ + H₂O (1b)

where R'₂SnO is di-n-butyltin oxide, di-n-octyltin oxide or a mixture thereof;
R' is an alkyl linear, branched, or cyclic C₁-C₁₂ hydrocarbon group. Preferably, R' is methyl, n-butyl, n-octyl or a mixture thereof.
-SR" is an alkyl thioglycolate, an alkyl thiopropionate or 2-mercaptoethyl carboxylate group, where the R" alkyl group is linear, branched, or cyclic C₆-C₁₈ hydrocarbon group; and
-SR‴S is an alkylene glycol dithioester, such as alkylene glycol di-thioglycolate or alkylene glycol di-thiopropionate, where the R‴ alkyl group is a linear or branched C₁-C₆ hydrocarbon group.

R' of R'₂SnO, R'Sn(SR")₃ and R'₂Sn(SR")₂ can be the same or different.

H₂(SR‴S) is ethylene glycol dithioglycolate, 1,2-propylene glycol dithioglycolate, 1,3-propylene glycol dithioglycolate, ethylene glycol dithiopropionate or mixtures thereof. Ethylene glycol dithioglycolate is the most preferred.

R'Sn(SR")₃ is as defined above. Preferably, R'Sn(SR")₃ is monomethyltin tris(2-ethylhexyl thioglycolate), monobutyltin tris(2-ethylhexyl thioglycolate), mono-n-octyltin tris(2-ethylhexyl thioglycolate), or mixtures thereof are preferred. No hydrocarbon solvent is required for completing this synthesis.

R'₂Sn(SR")₂ is as defined above. Preferably, R'₂Sn(SR")₂ is dimethyltin bis(2-ethylhexyl thioglycolate), dibutyltin bis(2-ethylhexyl thioglycolate), di-n-octyltin bis(2-ethylhexyl thioglycolate), dimethyltin bis(2-mercaptoethyl tallate) or mixtures thereof. No hydrocarbon solvent is required for completing this synthesis.

Preferably, the molar ratio of R'₂SnO to H₂(SR‴S) to R'Sn(SR")₃ or R'₂Sn(SR")₂ is about 1:1:1 to 3. For the purposes of this specification, the term "about" with respect to the ratio of reactants means that where a single value is given in a ratio, that ratio can vary by up to 15%. Thus, here the ratio of R'₂SnO to H₂(SR‴S) can range from 0.85:1 to 1 to 0.85. The ratio of H₂(SR‴S) to R'Sn(SR")₃ or R'₂Sn(SR")₂ is 1:1 to 3.

The reaction takes place at a temperature of 60-120°C over 1-3 hours, preferably at a temperature of 70-105°C over 1.8 to 2.2 hours. To synthesize the stabilizer, water is removed under 1-15 cmHg vacuum as the reaction is progressed at the provided reaction temperature.

### B. Processes for the preparation bis(alkyltin mercaptide) compounds containing 4 and 5 thio-ester groups by reacting dialkyltin alkylene glycol dithioesters with either di-alkyltin bis-thioester or mono-alkyltin tris-thioester (equations 2 and 3, respectively)

R'₂Sn(SR‴S) + R'₂Sn(SR")₂ → (SR")R'₂Sn(SR‴S)SnR'₂(SR''), (2)

where R' is an alkyl linear, branched, or cyclic C₁-C₁₂ hydrocarbon group. Preferably, R' is methyl, n-butyl, n-octyl or a mixture thereof.
-SR" is an alkyl thioglycolate, an alkyl thiopropionate or 2-mercaptoethyl carboxylate group, where the R" alkyl group is linear, branched, or cyclic C₆-C₁₈ hydrocarbon group; and
-SR‴S is an alkylene glycol dithioester, such as alkylene glycol di-thioglycolate or alkylene glycol di-thiopropionate, where the R"' alkyl group is linear or branched C₁-C₆ hydrocarbon group.
R' of R'₂Sn(SR‴S) and R'₂Sn(SR")₂ can be the same or different.
R'₂Sn(SR‴S) + R'Sn(SR")₃ → (SR")R'₂Sn(SR‴S)SnR'(SR'')₂, (3)
where R' of R'₂Sn(SR‴S), R'Sn(SR")₃ and R'₂Sn(SR")₂ can be the same or different.

No hydrocarbon solvent is required for completing these reactions.
The reaction is conducted at 25-120°C over 1-3 hours, preferably at 30-80°C over 0.8 to 1.2 hours. The reaction is relatively fast. The preferred molar ratio of the raw materials is about 1:1-3.

### C. Processes for the synthesis of bis(alkyltin mercaptide) compounds containing 4 to 6 thio-ester groups by reacting alkylene glycol di-thioesters with either mono-alkyltin mono-chloro-bis-thioglycolates or dialkyltin (chloro-thioglycolates) (equations 4 and 5, respectively)

2 R'SnCl(SR")₂ + H₂(SR‴S) → (SR")₂R'Sn(SR‴S)SnR'(SR")₂ + 2 HCl, (4)

2 R'₂Sn[Cl(SR")] + H₂(SR‴S) → (SR")R'₂Sn(SR‴S)SnR'₂(SR'') + 2 HCl, (5)

Linear bis(alkyltin mercaptide) stabilizer compounds of this invention prepared according to processes A, B and C described above may contain 5-50% of cyclic dialkyltin compounds, such as ethylenebisthioglycolate dialkyltin, as impurities.
R' is an alkyl linear, branched, or cyclic C₁-C₁₂ hydrocarbon group. Preferably, R' is methyl, n-butyl, n-octyl or a mixture thereof.
-SR" is an alkyl thioglycolate, an alkyl thiopropionate or 2-mercaptoethyl carboxylate group, where the R" alkyl group is linear, branched, or cyclic C₆-C₁₈ hydrocarbon group; and
-SR‴S is alkylene glycol dithioesters, such as alkylene glycol di-thioglycolate or alkylene glycol di-thiopropionate, where the R‴ alkyl group is linear or branched C₁-C₆ hydrocarbon group.
R'SnCl(SR")₂ is prepared according to equation 6:

   2 R'Sn(SR")₃ + R'SnCl₃ →3 R'SnCl(SR")₂, (6)
and where R' of R'Sn(SR")₃ and R'SnCl₃ can be the same or different. The preferred molar ratio of the reacting raw materials is about stochiometric 2:1.
R'₂Sn[Cl(SR")] is prepared according to equation 7:

   R'₂Sn(SR")₂ + R'₂SnCl₂ → 2 R'₂SnCl(SR"), (7)
where R' of R'₂Sn(SR")₂ and R'₂SnCl₂ can be the same or different; the preferred molar ratio of the reacting raw materials is about stochiometric 1:1.

Reactions 4 and 5 are conducted at 40-100°C over 0.5-2.0 hours, preferably at 45.0 to 55.0°C over 0.8 to 1.2 hours. To drive the reaction to completion it is critical to conduct the reaction in the presence of ammonia, adding R'SnCl(SR")₂ or R'₂Sn[Cl(SR")] last, i.e., the organotin compounds are added to the mixture of glycol dithioesters and ammonia. The target product yield is about 90%.
Reactions 6 and 7 are conducted at 50-180°C over 0.5-2.0 hours, preferably at 50-120°C over 1 hour. No hydrocarbon solvent is required for completing these reactions.

Bis(alkyltin mercaptides) of formulae (I) prepared from a) ethylene glycol di-thioglycolate, dibutyltin oxide and dimethyltin bis(2-ethylhexyl thioglycolate) (designated as MBTT for "Methyl-Butyl-Thio-Tin"), b) ethylene glycol di-thioglycolate, dibutyltin oxide and di-n-butyltin bis(2-ethylhexyl thioglycolate) (designated as BBTT for "Butyl-Butyl-Thio-Tin"), c) ethylene glycol di-thioglycolate, di-n-octyltin oxide and dimethyltin bis(2-ethylhexyl thioglycolate) (designated as MOTT for "Methyl-Octyl-Thio-Tin") and d) ethylene glycol di-thioglycolate, dibutyltin oxide and di-methyltin bis(2-mercaptoethyl tallate) (designated as MORT for "Methyl-Octyl-Reverse Thio-tin") were the most efficient heat stabilizers of the present subject matter in tested PVC compounds, as demonstrated in the Examples.

Similar bis(alkyltin mercaptides) of formulae (I) were also obtained by using fully esterified dibasic acids (such as adipic acid) with mercapto-alcohols (such as 2-mercaptoethanol) instead of using alkylene glycol di-thioesters, (such as ethylene glycol di-thioglycolate). However, the heat stabilizing efficiency of this type of bis(alkyltin reverse ester) stabilizer containing two tin atoms and at least 4 thio-ester groups was not as high.

The organotin stabilizers of the present subject matter can also be used in combination with conventional organotin stabilizers, mixed metal carboxylate stabilizers and their components, such as stearates of calcium, barium, or zinc, hydrotalcites, zeolites, sodium perchlorate, sodium adipate, sodium sebacate, epoxidized soybean oil, epoxidized mono-esters of fatty acids, phosphites, phenolic antioxidants.

### Chlorine-containing Polymers

The chlorine-containing polymers of this invention include poly(vinyl chloride) (PVC). As employed herein, the term PVC is intended to include both homopolymers and copolymers of vinyl chloride, i.e., vinyl resins containing vinyl chloride units in their structure, e.g., copolymers of vinyl chloride and vinyl esters of aliphatic acids, in particular vinyl acetate; copolymers of vinyl chloride with esters of acrylic and methacrylic acid and with acrylonitrile; copolymers of vinyl chloride with diene compounds and unsaturated dicarboxylic acids or anhydrides thereof, such as copolymers of vinyl chloride with diethyl maleate, diethyl fumarate or maleic anhydride; post-chlorinated polymers, such as chlorinated poly(vinyl chloride) (CPVC), and copolymers of vinyl chloride; copolymers of vinyl chloride and vinylidene chloride with unsaturated aldehydes (such as crotonaldehyde, ketones (such as vinyl methyl ketone) and ethers (such as vinyl methyl ether, vinyl isobutyl ether, and the like). The most preferred are PVC homopolymers and CPVC.

Typical optional components of PVC compounds may include additives such as co-stabilizers, lubricants, fillers, processing aids, impact modifiers, antioxidants and plasticizers known to those skilled in the art and also described in literature such as "Handbook of Vinyl Formulating", 2nd edition, Grossman, Richard F., Wiley & Sons, 2008; and "PVC Handbook", Wilkes, Charles E., et al, Hanser, Cincinnati 2005.

PVC compounds stabilized with heat stabilizers of the present invention can be fabricated into articles. The present disclosure provides articles including manufacturing profiles, sheets, films, pipes and pipe fittings, medical devices and packaging materials produced from the stabilized PVC-containing compositions. Such articles can be produced via molding, calendaring, or extrusion processes.

The following Examples further detail and explain preparation of the inventive bis(alkyltin mercaptides) and their use as stabilizers, as well as demonstrating their efficacy as means for providing enhanced stability and improved odor reduction performance. These examples merely illustrate the invention. Those skilled in the art will recognize many variations that are within the spirit of the invention and scope of the claims.

### Examples

The following examples further detail and explain the preparation of the inventive heat stabilizers and demonstrate their efficacy for preventing discoloration (caused by high in-process shear and exposure to heat) of PVC compounds. Those skilled in the art will recognize many variations that are within the spirit of this invention and scope of its claims.

Synthesis of bis(alkyltin mercaptides) of formula (Ib) according to the Method A (equation 1a).

### Example 1

MBTT ("methyl-butyltin bis-thiolgycolate") was prepared by reacting 24.2g ethylene glycol di-thioglycolate (Sigma-Aldrich), 27.8g dibutyltin oxide (Sigma-Aldrich) and 50g dimethyltin bis(2-ethylhexyl thioglycolate) (manufactured by Galata Chemicals, LLC as Mark 1900) in a 250 ml flask and removing 2.0g water at 65-102°C under 4 cmHg vacuum. The product was obtained at about 99% yield. Tin content: 23.56%, Refractive Index 1.5410.

### Example 2

BBTT ("butyl-butyltin bis-thioglycolate") was prepared by reacting 24.2g ethylene glycol di-thioglycolate, 27.8g dibutyltin oxide and 50g dibutyltin bis(2-ethylhexyl thioglycolate) (manufactured by Galata Chemicals, LLC as Mark 292) in a 250 ml flask and removing 2.0g water at 70-103°C under 5 cmHg vacuum. The product was obtained at about 99% yield. Tin content: 22.55%, Refractive Index 1.5352.

### Example 3

MOTT (methyl-octyltin bis-thioglycolate") was prepared by reacting 19.4g ethylene glycol di-thioglycolate, 32.25g dioctyltin oxide (manufactured by Galata Chemicals, GmbH as Mark DOTO) and 50g dimethyltin bis(2-ethylhexyl thioglycolate) (manufactured by Galata Chemicals, LLC as Mark 1900) in a 250 ml flask and removing 1.7g water at 60-103°C under 7 cmHg vacuum. The product was obtained at about 99% yield. Tin content: 20.46%, Refractive Index 1.5225.

### Example 4

MBRT ("methyl-butyltin reverse bis-thioester") was prepared by reacting 24.2g ethylene glycol di-thioglycolate, 27.8g dibutyltin oxide and 50g dimethyltin bis(2-mercaptoethyl tallate) (manufactured by Galata Chemicals, LLC) in a 250 ml flask and removing 2.0g water at 60-90°C under 6 cmHg vacuum. The product was obtained at about 99% yield. Tin content: 21.50%, Refractive Index 1.5335.

The MOTT was also obtained using Method B (equation 2) and Method C (equation 5). The same chemical identity of the three obtained MOTT samples was confirmed via ¹¹⁹NMR Spectroscopy (Bruker Avance 200 NMR Spectrometer), tin content and Refractive Index.

Efficacy of the obtained bis(alkyltin mercaptides) of formula (I) as heat stabilizers of this invention was evaluated in PVC compounds subjected to the dynamic heat stability test. Mark 1900 (a stabilizer of high dimethyltin bis(2-ethylhexyl thioglycolate) content (manufactured by Galata Chemicals, LLC) was used as Control 1. Mark 17 MOK (a stabilizer of a high dioctyltin bis(2-ethylhexyl thioglycolate) content (manufactured by Galata Chemicals, GmbH) was used as Control 2.

### Dynamic Heat Stability Test Method (Brabender Torque Rheometer)

Dry blends of a screening rigid PVC profile compound (Table 1) were prepared using the stabilizer compositions of Example1-4 and Controls 1-2. The stabilizers were added at the same weight of 1.2 phr (phr is a commonly used unit of weight that specifies the number of weight Parts of a component per one hundred weight parts of polymer Resin) into the tested PVC dry blends. Each PVC dry blend was compounded and subjected to the dynamic heat stability test using a Brabender Torque Rheometer.

**Table 1. Tested rigid profile PVC compounds**

| **Components** | **Loadings, phr** |
|---|---|
| PVC Resin 5385 | 100.0 |
| Impact modifiers and process aids | 6.5 |
| Metal stearate | 1.4 |
| Lubricants | 1.1 |
| Titanium dioxide | 8.5 |
| Stabilizer | 1.2 |

The Brabender torque rheometer test conditions were as follows: temperature 180°C, 50 rpm; compound chips were taken every 3 minutes. The Yellowness Index was measured according to ASTM D1925-70. Higher Yellowness Index values indicate stronger discoloration and lower heat stabilizing effectiveness of the tested stabilizers. Results of the dynamic heat stability test on the compounds of Table 1 are in Table 2.

**Table 2. Dynamic heat stability (expressed in Yellowness Index) of tested PVC profile compounds**

| Time, min. | Stabilizers in PVC Compounds | | | | | |
|---|---|---|---|---|---|---|
| | Control 1 Mark 1900 | Control 2 Mark17 MOK | Example 1 MBTT | Example 2 BBTT | Example 3 MOTT | Example 4 MBRT |
| 0 | 5.03 | 4.98 | 4.04 | 4.20 | 4.12 | 3.87 |
| 3 | 5.01 | 5.00 | 4.05 | 4.21 | 4.15 | 3.90 |
| 6 | 7.14 | 7.73 | 6.65 | 6.81 | 7.02 | 7.49 |
| 9 | 10.90 | 11.47 | 9.71 | 10.15 | 10.37 | 10.88 |
| 12 | 14.62 | 15.98 | 12.60 | 13.83 | 14.22 | 16.02 |
| 15 | 17.64 | 25.73 | 17.26 | 19.26 | 20.33 | 28.22 |
| 18 | 25.84 | 32.13 | 29.25 | 34.88 | 33.82 | 34.59 |

According to the obtained results of the dynamic heat stability test (Table 2), all four bis(alkyltin mercaptide) stabilizers of formula (Ib) of this invention (Examples 1-4) imparted remarkably superior initial heat stability (during 0-6 minutes of the test) compared to commercially manufactured Control 1 and Control 2.

According to Table 2, Yellowness Index values imparted by Examples 1-4 at 0-3 min. of the test were superior (lower) 3.90-4.60 compared to 4.98-5.03 imparted by the Controls. This reduction in color development by 0.43-1.08 Yellowness Index units imparted by Examples 1-4 is substantial. The reduction in yellow color development is also very unexpected, since: a) dialkyltin components are known to provide PVC with excellent long-term stability (>9 minutes of the test) and modest initial heat stability, and mono-alkyltin components are known to impart excellent initial heat stability and modest long-term heat stability [M. Schiller, PVC Additives, 2^{nd} Edition, Hanser Publishers, p. 23, 2022], and b) the tested stabilizers of this invention Examples 1-4 are based on dialkyltin components. Yellowness Index values imparted by Examples 1-4 during 6-15 min. of the test were either comparable or superior (lower) to Control 1 and Control 2.

### Odor Intensity Test

Odor intensity of the selected alkyltin thio-ester heat stabilizers, including Control 1, Control 2, and Example 3, were assessed with an Odor Panel. The odor panel consisted of 5 experienced persons that participated in testing with the odor panels previously. The odor of the stabilizer samples was assessed according to the following odor-intensity scale:
1 - odorless
2 - light odor
3 - mild door
4 - strong odor
5 - very strong odor
The lower rating indicates lower odor intensity.

Results of the odor assessment of the selected heat stabilizer are in Table 3.

**Table 3. Odor intensity of the selected heat stabilizers**

| Odor Panel | Odor Intensity (scale 1-5) | | |
|---|---|---|---|
| | Control 1 | Control 2 | Example 3 |
| 1 | 2 | 2 | 1 |
| 2 | 3 | 2 | 1 |
| 3 | 2 | 2 | 1 |
| 4 | 1 | 2 | 1 |
| 5 | 1 | 2 | 1 |
| Average Rating | 1.8 | 2.0 | 1.0 |

The inventive stabilizer of Example 3 was found to be of substantially lower odor (average odor rating 1.0) than the conventional alkyltin thioglycolates Control 1 and Control 2 (average odor ratings 1.8 and 2.0, respectively).

## Claims

1. A composition of liquid bis(alkyltin mercaptide) compounds containing 4-6 thio-ester groups of formula (I):
(R"S)ₐR'_{b}Sn(SR‴S)SnR'_{c}(SR")_{d}, (I)
where
a, b, c and d are equal to 1 or 2, and a + b = c+ d = 3,
R' is a linear, branched or cyclic C₁-C₁₂ hydrocarbon group,
SR" and R''S are independently selected from an alkyl thioglycolate group, an alkyl thiopropionate or a 2-mercaptoethyl carboxylate group, where the alkyl is a linear, branched or cyclic C₆-C₁₈ hydrocarbon group; and
SR‴S is an alkylene glycol di-thioester group, where the alkyl groups are linear or branched C₁-C₆ hydrocarbon groups.

2. The composition of claim 1 wherein the hydrocarbon group of R' is methyl, n-butyl, n-octyl or a mixture thereof.

3. The composition of claim 1 wherein the alkylene glycol di-thioester group is selected from alkylene glycol di-thioglycolate or alkylene glycol di-thiopropionate.

4. The composition of claim 3 wherein the alkylene glycol di-thioester group is ethylene glycol di-thioglycolate.

5. The composition of claim 1 wherein Formula I is:
(R"S)₂R'Sn(SR‴S)SnR'(SR")₂ (Ia).

6. The composition of claim 1 wherein Formula I is:
(SR")R₂Sn(SR‴S) Sn R'₂(SR") (Ib).

7. The composition of claim 1 wherein Formula I is:
(SR")R'₂Sn(SR‴S)SnR'(SR")₂ (Ic).

8. A process for preparing the liquid bis(alkyltin mercaptides) of claim 1 comprising:
- reacting dialkyltin oxides with alkylene glycol di-thioesters in the presence of monoalkyltin tris(2-ethylhexyl thioesters), dialkyltin bis(2-ethylhexyl thioesters), or mixtures thereof,
wherein the dialkyltin oxides are selected from di-n-butyltin oxide, di-n-octyltin oxide or mixtures thereof, and the alkyl groups of the dialkyltin oxides, monoalkyltin tris-thioesters and dialkyltin bis-thioesters can be the same or different, and
the alkylene glycol di-thioesters are selected from ethylene glycol dithioglycolate, 1,2-propylene glycol dithioglycolate, 1,3-propylene glycol dithioglycolate, 1,2-ethylene glycol dithiopropionate or mixtures thereof.

9. The process of claim 8 wherein the alkylene glycol di-thioesters are 1,2-ethylene glycol dithiopropionate or ethylene glycol dithioglycolate.

10. The process of claim 8 wherein the monoalkyltin tris-thioesters are selected from monomethyltin tris(2-ethylhexyl thioglycolate), monobutyltin tris(2-ethylhexyl thioglycolate), mono-n-octyltin tris(2-ethylhexyl thioglycolate), or mixtures thereof.

11. The process of claim 8 wherein the dialkyltin bis-thioesters are selected from dimethyltin bis(2-ethylhexyl thioglycolate), dibutyltin bis(2-ethylhexyl thioglycolate), di-n-octyltin bis(2-ethylhexyl thioglycolate), dimethyltin bis(2-mercaptoethyl tallate) or mixtures thereof.

12. A process for the preparation of bis(alkyltin mercaptide) compounds containing 4 thioester groups, comprising:
- reacting dialkyltin oxides with alkylene glycol di-thioesters in the presence of at least one of a monoalkyltin tris-thioesters and a dialkyltin bis-thioester according to equations (1a) or (1b):
R'₂SnO + H₂(SR‴S) + R'₂Sn(SR")₂ → (SR")R'₂Sn(SR‴S)SnR'₂(SR'') + H₂O (1a)
R'₂SnO + H₂(SR‴S) + R'Sn(SR")₃ → (SR")R'₂Sn(SR‴S)SnR'(SR")₂ + H₂O (1b)
wherein no hydrocarbon solvent is used in the reaction, R'₂SnO is selected from di-n-butyltin oxide, di-n-octyltin oxide or a mixture thereof, and R' of R'₂SnO, R'Sn(SR")₃ and R'₂Sn(SR")₂ can be the same or different,
H₂(SR‴S) is selected from ethylene glycol dithioglycolate, 1,2-propylene glycol dithioglycolate, 1,3-propylene glycol dithioglycolate, ethylene glycol dithiopropionate or mixtures thereof,
R' is an alkyl linear, branched or cyclic C₁-C₁₂ hydrocarbon group,
SR" and R''S are independently selected from an alkyl thioglycolate group, an alkyl thiopropionate or a 2-mercaptoethyl carboxylate group, where the alkyl is a linear, branched or cyclic C₆-C₁₈ hydrocarbon group; and
SR‴S is an alkylene glycol di-thioester group, where the alkyl groups are linear or branched C₁-C₆ hydrocarbon groups,
wherein the reaction is conducted at a temperature of 60.0 to 120.0°C for a time of 1.0 to 3.0 hours.

13. The process of claim 12, wherein R'₂Sn(SR")₂ is selected from dimethyltin bis(2-ethylhexyl thioglycolate), dibutyltin bis(2-ethylhexyl thioglycolate), di-n-octyltin bis(2-ethylhexyl thioglycolate), dimethyltin bis(2-mercaptoethyl tallate) or mixtures thereof.

14. The process of claim 12 wherein H₂(SR‴S) is ethylene glycol dithioglycolate.

15. The process of claim 12 wherein R'Sn(SR")₃ is selected from monomethyltin tris(2-ethylhexyl thioglycolate), monobutyltin tris(2-ethylhexyl thioglycolate), mono-n-octyltin tris(2-ethylhexyl thioglycolate), or mixtures thereof.

16. The process of claim 12 wherein the molar ratio of R'₂SnO to H₂(SR‴S) to R'Sn(SR")₃ or R'₂Sn(SR")₂ is about 1:1:1 to 3.

17. The process of claim 12 wherein the reaction temperature is 70.0 to 105.0°C for the time of 2.0 to 3.0 hours.

18. The process of claim 12 further comprising removing water under a 1.0 to 15.0 cm-Hg vacuum.

19. A process for the preparation of bis(alkyltin mercaptide) compounds containing 4 or 5 thio-ester groups comprising:
- reacting dialkyltin alkylene glycol dithioesters with either di-alkyltin bis-thioester or mono-alkyltin tris-thioester according to equations (2) or (3), wherein no hydrocarbon solvent is used in the synthesis:
R'₂Sn(SR‴S) + R'₂Sn(SR")₂ → (SR")R'₂Sn(SR‴S)SnR'₂(SR"), (2)
where R' of R'₂Sn(SR‴S) and R'₂Sn(SR")₂ can be the same or different, or
R'₂Sn(SR‴S) + R'Sn(SR")₃ → (SR")R'₂Sn(SR‴S)SnR'(SR'')₂, (3)
where R' of R'₂Sn(SR‴S), R'Sn(SR")₃ and R'₂Sn(SR")₂ can be the same or different,
R' is a linear, branched or cyclic C₁-C₁₂ hydrocarbon group,
SR" and R''S are independently selected from an alkyl thioglycolate group, an alkyl thiopropionate or a 2-mercaptoethyl carboxylate group, where the alkyl is a linear, branched or cyclic C₆-C₁₈ hydrocarbon group; and
SR‴S is an alkylene glycol di-thioester group, where the alkyl groups are linear or branched C₁-C₆ hydrocarbon groups,
wherein the reaction is conducted at a temperature of 25.0 to 120.0°C for a time of 1.0 to 3.0 hours.

20. The process of claim 19 wherein the reaction is conducted at the temperature of 30.0 to 80.0°C for the time of 1.0 hour to 3.0 hours.

21. The process of claim 19 wherein the molar ratio of the raw materials is about 1:1 to 3.

22. A process for the synthesis of bis(alkyltin mercaptide) compounds containing 4 to 6 thioester groups comprising:
- reacting alkylene glycol di-thioesters with either mono-alkyltinmono-chloro-bis-thioglycolates or dialkyltin (chloro-thioglycolates) according to equations (4) or (5):
2 R'SnCl(SR")₂ + H₂(SR‴S) → (SR")₂R'Sn(SR‴S)SnR'(SR")₂ + 2 HCl, (4)
or
2 R'₂Sn[Cl(SR")] + H₂(SR‴S) → (SR")R'₂Sn(SR‴S)SnR'₂(SR") + 2 HCl, (5)
wherein R' is an alkyl linear, branched or cyclic C₁-C₁₂ hydrocarbon group,
-SR" is an alkyl thioglycolate, an alkyl thiopropionate or 2-mercaptoethyl carboxylate group, where the R" alkyl group is linear, branched or cyclic C₆-C₁₈ hydrocarbon group; and
-SR"'S is an alkylene glycol dithioester, selected from alkylene glycol di-thioglycolate or alkylene glycol di-thiopropionate, where the R‴ alkyl group is linear or branched C₁-C₆ hydrocarbon group.
wherein reactions (4) and (5) are performed in the presence of ammonia, and R'SnCl(SR")₂ or R'2Sn[Cl(SR")] are added last, the product yield is 85.0 to 95.0 %,
and R'SnCl(SR")₂ is prepared according to equation (6):
2 R'Sn(SR")₃ + R'SnCl₃ →3 R'SnCl(SR")₂, (6)
where R' of R'Sn(SR")₃ and R'SnCl₃ can be the same or different,
and where R'₂Sn[Cl(SR")] is prepared according to equation (7):
R'₂Sn(SR")₂ + R'₂SnCl₂ → 2 R'₂SnCl(SR"), (7)
where R' of R'₂Sn(SR")₂ and R'₂SnCl₂ can be the same or different,
wherein reactions (4) and (5) are conducted at a temperature of 40 to 100°C over 0.5 to 2.0 hours, and reactions (6) and (7) are conducted at 50 to 180°C over 0.5 to 2.0 hours.

23. The process of claim 22 wherein the temperature for reactions (4) and (5) are 45.0 to 55.0°C for 0.75 to 1.25 hours.

24. The process of claim 22 wherein the temperature for reactions of (6) and (7) are 50.0 to 120.0°C for the time of 0.75 to 1.25 hour.

25. The process of claim 22 wherein the molar ratio of the reacting raw materials in equation (6) is about stochiometric 2:1.

26. The process of claim 22 wherein the molar ratio of the reacting raw materials in equation (7) is about stochiometric 1:1.

27. A method for stabilizing a chlorine-containing polymer against thermal decomposition and in-process shear, comprising contacting the liquid bis(alkyltin mercaptide) compound of claim 1 with the chloride-containing polymer.

28. The method of claim 27 where the chlorine-containing polymer is PVC or CPVC.

29. A stabilized polymer compound comprising:
- a polymer selected from a CPVC, a PVC homopolymer, a PVC co-polymer or mixtures thereof; and
- the liquid bis(alkyltin mercaptide) compound of claim 1.

30. The stabilized polymer compound of claim 29 having an odor lower than the polymer without the liquid bis(alkyltin mercaptide) compound.

31. The stabilized polymer compound of claim 29 having a Yellowness Index initial heat stability under the dynamic heat stability of 0.5 to 8.

32. The stabilized polymer compound of claim 29, where the amount of the liquid bis(alkyltin mercaptide) compound in the stabilized polymer compound ranges from 0.1 to 7.0 phr.

33. The stabilized polymer compound of claim 32, where the amount of the liquid bis(alkyltin mercaptide) compound in the stabilized polymer compound ranges from 0.5 to 3.0 phr.

34. A process for manufacturing articles comprising molding or extruding the stabilized polymer compound of claim 29, the article being selected from profiles, sheets, pipes, film and pipe fittings.

35. An article selected from profiles, sheets, pipes, film and pipe fittings, produced by the process of claim 34.

36. The composition of claim 29 having an odor lower than the composition without the composition of liquid bis(alkyltin mercaptide) compounds.
